Europäisches Patentamt

(19) European Patent Office    (11) Publication number: **0 013 119**

Office européen des brevets    **B1**

(12)    **EUROPEAN PATENT SPECIFICATION**

(45) Date of publication of patent specification: **05.10.83**    (51) Int. Cl.³: **B 29 F 1/06, B 29 G 3/00**

(21) Application number: **79302944.8**

(22) Date of filing: **18.12.79**

(54) **Apparatus for runnerless injection-compression molding thermosetting materials.**

(30) Priority: **21.12.78 US 972182**

(43) Date of publication of application:
**09.07.80 Bulletin 80/14**

(45) Publication of the grant of the patent:
**05.10.83 Bulletin 83/40**

(84) Designated Contracting States:
**CH DE FR GB IT**

(56) References cited:
**CH - A - 514 428**
**FR - A - 1 487 410**

**SPE JOURNAL, vol. 27, no. 9, September 1971, pages 30—32**
**Greenwich, U.S.A.**
**G. B. RHEINFRANK: "You can injection-mold alkyd and polyester compounds at high speeds"**

**EUROPEAN PLASTICS NEWS, vol. 5, February 1978, pages 24, 27**
**London, G.B.**
**"Multi-cavity tools for injection-compression"**

(73) Proprietor: **OCCIDENTAL CHEMICAL CORPORATION**
**P.O. Box 189**
**Niagara Falls New York 14302 (US)**

(72) Inventor: **Dannels, W. Andrew**
**4812 East River Road**
**Grand Island, New York (US)**
Inventor: **Bainbridge, Robert W.**
**114 Woodlake Drive**
**Gainsville, Georgia (US)**

(74) Representative: **Williams, Trevor John et al,**
**J.A. KEMP & CO. 14 South Square Gray's Inn**
**London WC1R 5EU (GB)**

Apparatus for runnerless injection-compression
molding thermosetting materials

The present invention relates to improved apparatus for injection molding thermosetting materials and, more particularly, to injection molding of thermosetting synthetic resin compositions.

Injection molding is an advantageous method of forming articles of synthetic resin. In general terms, injection molding is a process wherein the molding composition, in a melted or plasticized state, is injected into the mold cavity. Typically, cold molding composition in granular form is fed from a hopper into a heated cylinder containing a screw. The molding composition is heated, melted and plasticized on the screw flights, and then the screw, acting as a ram, injects the melted and plasticized material into a mold cavity. In the case of thermosetting material, the molded material is cured in the mold by compaction and by heat added to the mold cavity. After curing, the article is ejected from the mold and the process repeated.

Injection molding offers the advantages of reduced molding cycles, better control of process variables, and increased productivity as compared with conventional compression and transfer molding processes. The major disadvantage with the injection molding of thermosetting materials is the generation of a considerable amount of waste material, particularly when multiple cavity systems are employed. The waste material is generated by thermosetting material that has cured, become infusible, in the runner and sprue systems and cannot be reused. The amount of non-reusable waste material generated in this fashion can be substantial, ranging typically from about 15 to about 80 percent of the total amount of material required to mold an article.

A recent technical advance in the molding art has been the adaptation of the runnerless injection, or cold manifold, process to the injection molding of thermosetting resins. In the cold manifold process, the material in the sprue and manifold system is maintained at a temperature sufficient to maintain the material in a plasticized condition, without causing the material to prematurely cure of "set-up". Thus, when a cured part is removed from the mold cavity, the material in the sprue and manifold becomes part of the next molding, instead of being discarded as in conventional injection molding operations. The runnerless injection process, therefore, provides for significant savings in material.

The thermosetting materials usually employed in runnerless injection processes differ in some respects from materials normally employed in conventional injection processes because of the different requirements of each process. One significant difference is that a runnerless injection material is adapted to remain in a plasticized or fused condition in the feed system for extended periods of time without prematurely curing, usually at temperatures between 104° and 116°C (220° to 240°F) while also being capable of rapidly curing in the mold cavity at the molding temperature, usually about 170°C (340°F). Although such formulations are useful in the present invention, they are not required, and the molding compositions presently utilized may be selected from the more economical and more readily available standard thermosetting molding compositions. An example of a suitable runnerless injection molding composition comprises a phenol-aldehyde resin component wherein (a) from 55% to 90% of the available theoretical para-phenyl linkages in the resin chain are bridged to a phenyl group, (b) the carbon chains linked between adjacent hydroxyl-substituted phenyl nuclei have 1 to 5 carbon atoms, and (c) the hydroxyl-substituted phenyl nuclei are capable of chain growth at unsubstituted ortho- and para-positions of said nuclei (see U.K. Patent Application GB—A—7919670).

Thermosetting molding materials useful in the present invention may suitably be selected from the thermosetting synthetic resins and resin compositions typically used in molding operations, for example, phenolic; amino, such as, urea, melamine and melamine/phenolic; polyester resins in granular, nodular, bulk or sheet forms; alkyd; epoxy; silicone; diallylphthalate; polyamides; or from thermosetting natural and synthetic rubber compositions. Phenolic resin compositions are especially useful as the molding material. Phenolic resin compositions used in molding operations are usually employed in the form of molding compositions. Phenolic molding compositions typically are particulate in form containing a molding grade phenolic resin, a cross-linking agent, such as hexamethylenetetramine, and suitable filler materials.

Conventional reciprocating screw-type molding machines have a feed unit comprised of a nozzle member mounted on the front of a heated barrel. A reciprocal and rotatable screw is positioned within the barrel. The rotating motion of the screw plasticizes a thermosetting molding material within the barrel. Subsequently, a reciprocating motion of the screw, acting as a ram, feeds the plasticized molding material through the nozzle member, through a runner system, into a closed mold. The mold is heated to a temperature sufficiently high to cure the molding material.

The technique of injection-compression molding, for example as disclosed in French Patent Specification FR—A—1,487,410, basically consists of injecting a charge of plasticized molding material into a partially open mold; the final fill, or mold fit, is accomplished by a separate step, the subsequent complete closure of the mold. Injection compression molding makes possible a combination of the positive attributes of compression molding, i.e., improved dimensional stability, uniform density, low shrinkage and impact strength, with the automation and fast cure of injecting molding.

The present invention provides an improved apparatus for adapting the advantages of injection-compression molding to include the advantage of runnerless injection techniques and facilitates the use of standard, less costly, phenolic molding composition in such apparatus.

The present invention provides an improvement of an injection-compression molding apparatus comprising first stationary and second moveable platen assemblies each having a platen and a plurality of mold faces mounted on the platen by a heat plate provided with means for heating the heat plate, the mold faces of one of the platens being provided with runner channels; means for moving the moveable platen assembly into a position to bring the mold faces into close proximity to form partly open mold cavities, into position to close the partly open mold cavities to cure any thermosetting resin enclosed therein and into an open position for removal of a molded article therefrom; and a nozzle fitted to the injection barrel of an injection molding machine for injecting plasticised material into said runner channels and the partly open mold cavities, which apparatus is known from FR—A—1,487,410, the improvement existing in that said feed nozzle is formed of a housing defining an internal chamber provided with a narrowed restricted zone over an intermediate part of its length and with outlets positioned around the outer periphery of the nozzle for communication with the runner channels, means are provided for controlling the temperature of the housing adjacent said restricted zone, and means are provided on the mold faces of the moveable platen for interrupting the feed of thermo-setting material from the internal chamber to the runner channels in the mold faces of the stationary platen by blocking said runner channels when the molds are fully closed.

During use of the apparatus the temperature maintained in the nozzle member is sufficiently high to maintain the thermosetting molding material within the nozzle member in a plasticised state and sufficiently low that no substantial curing or setting-up of the thermosetting molding material takes places. By substantial curing or setting-up of the thermosetting molding material is meant the amount of premature polymerization which, would adversely inhibit the plasticity or mobility of the molding material.

The small amount of cured material in the runner channel is the only loss. The thermosetting material remaining in the nozzle and barrel is maintained in a plasticized, substantially uncured, state, ready for the next shot or filling operation.

The present invention provides in an injection-compression molding apparatus a special nozzle arrangement which enables the apparatus to be used more economically without detracting from the high quality production which can be obtained from the use of injection-compression molding. This nozzle is arranged to have outlets therefrom closed to prevent escape of plasticized material when the mold is fully closed and yet to have these outlets so placed that the apparatus operates essentially as a runnerless injection molding system with the minimum of wastage of material between the nozzle and the individual molds. Furthermore the nozzle is provided with a narrowed restricted zone between its inlet and outlet such that the volume of thermosetting plastics material in the nozzle is kept to a minimum enabling its temperature to be very accurately controlled so that it may be maintained at a high enough temperature for it to remain plasticized but at a temperature below the cooling temperature so that it will remain workable even when there are extended time delays between successive operations of the molding apparatus. Thus while it is known to have a temperature controlled runnerless nozzle as disclosed, for example, in Swiss Specification No. 514,428, there is no constriction in the internal chamber of such nozzle providing for a reduction of the volume of plastics material to be kept under accurately controlled temperature conditions. Thus while prior runnerless injection apparatus has, in general, been used with lower quality thermosetting plastics requiring less critical operating temperatures the apparatus of the present invention can be used with materials requiring more difficult thermosetting conditions and can be used to obtain high quality results using an injection-compression molding process.

It has been proposed in an article by G. B. Rheinfrank in pages 30 to 32 of SPE JOURNAL vol. 27, No. 9, September 1971 to provide a temperature controlled nozzle with a small internal diameter. However the nozzle as disclosed has the internal restriction over all the downstream end of the nozzle and is not provided in an intermediate portion only of the chamber within the nozzle, the disclosed nozzle being intended for use in molding equipment which provides a "cold-sprue" for automatic molding of thermosetting plastics. The nozzle as disclosed is not suitable for use with an injection-compression molding apparatus since there is no provision of specific shutoff means to prevent communication to runners from the nozzle. Thus the nozzle as illustrated simply opens directly into the runners with no flow control at that point, the nozzle being shut off by the curing of the plastics material in the runners. Thus with the "cold sprue" type of molding of the article it would be impractical to use this known nozzle in the present invention because of the lack of control of temperature which would arise downstream of the restriction with consequent tendency to cure in the downstream end of the nozzle itself, this tendecy being overcome with the present invention which provides the benefit of the restricted waste of a runnerless system together with the high quality product obtainable with an injection compression system.

The present invention will be illustrated and more fully described by reference to the accompanying drawings.

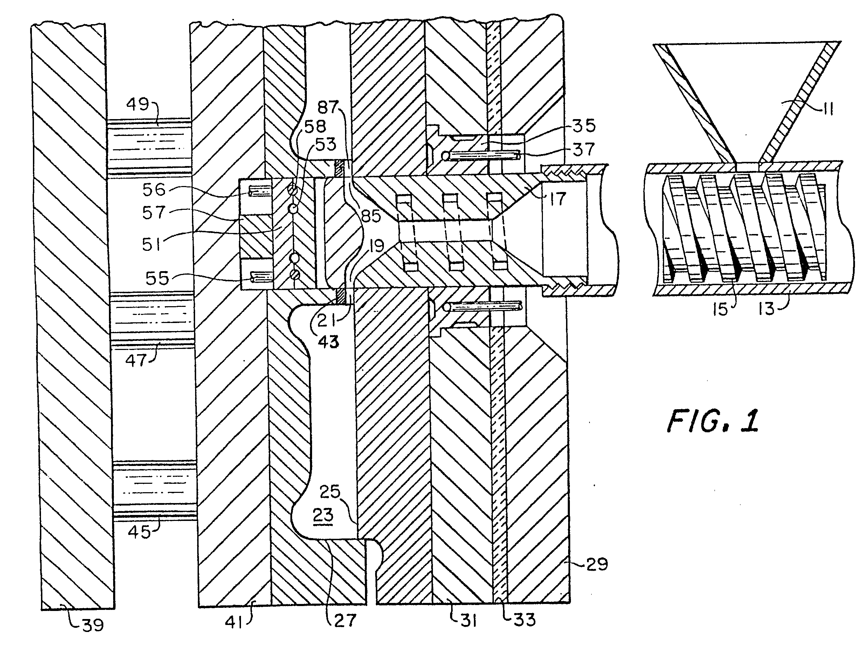

Figure 1 is a cross-sectional, partly schematic view of an apparatus of the present invention. The apparatus shown is a portion of an injection molding machine having a horizontal clamping arrangement. As shown in Figure 1, the apparatus is in the injection or feed stage of the molding cycle. In this stage, thermosetting molding material is fed into partially open molds.

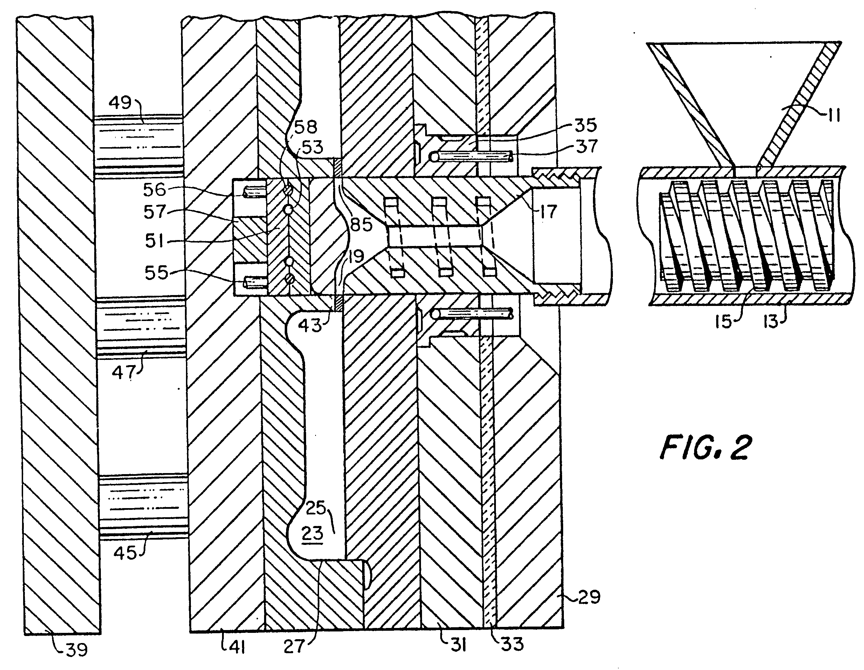

Figure 2 shows the apparatus of Figure 1 in the compression stage. In this stage the molds are completely closed. The thermosetting material within the confines of the closed mold during this stage is pressed and heated to cure the enclosed material to the shape of the mold cavity.

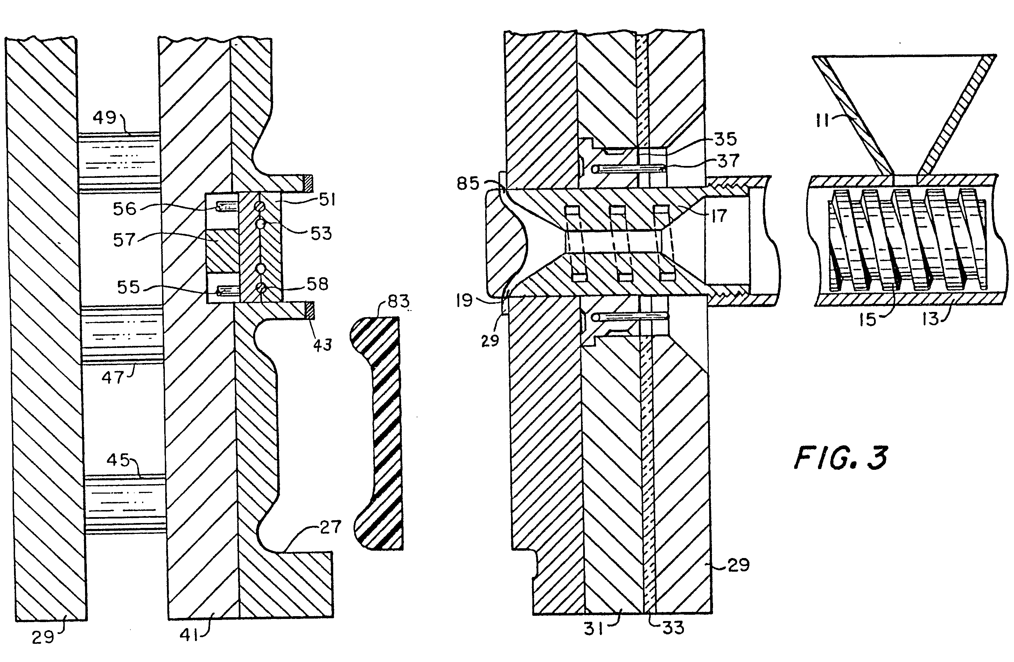

Figure 3 shows the apparatus of Figure 1 in an open position. In this position the movable platen assembly has been actuated to move in a direction away from the stationary platen assembly, allowing the removal of the molded articles from the open mold faces and facilitating the cleaning of the mold faces and surrounding area in preparation for repositioning the components in the feed stage as shown in Figure 1.

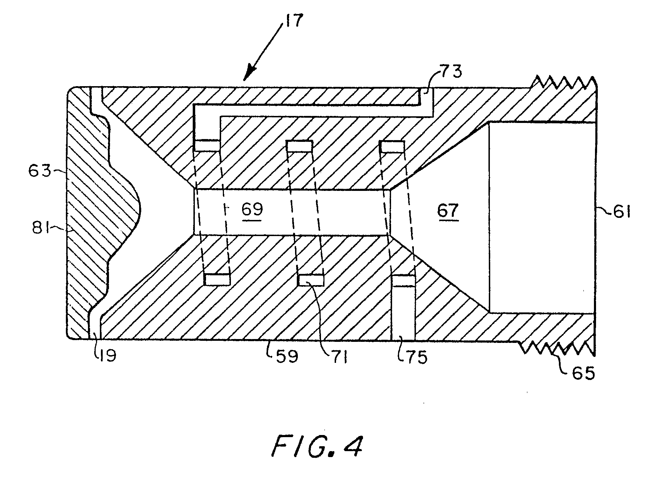

Figure 4 is an axial cross-sectional view showing the feed nozzle assembly of Figures 1, 2 and 3 in detail.

Looking now at Figure 1, thermosetting molding material is fed into feed hopper *11* and then into a plasticizing zone formed by heated barrel *13* and by the mechanical working of screw *15*. A predetermined amount of plasticized molding material is subsequently injected by screw *15*, acting as a ram, through nozzle member *17*, through feed outlets, such as *19*, runner channels, such as *21*, into mold cavities, such as *23*, formed by partially open mold faces, such as *25* and *27*.

The stationary assembly is comprised of stationary platen or support plate *29* which has stationary heat plate *31* mounted thereon. Suitably, heat plate *31* is separated from platen *29* by a layer of insulation *33*, e.g., insulating board. Heat plate *31* has a plurality of mold faces, such as *25*, mounted thereon. Heat plate *31* may suitably be heated by the circulation of steam or hot oil therethrough, but more preferably, electrically. Heat plate *31* supplies heat to mold faces, such as *25*. The temperature maintained on the mold faces is sufficiently high that, when combined with the pressure generated when the mold is completely closed, will cure or set the thermosetting material within the mold cavity. Temperatures in a range of between 135° and 216°C (275° to 425°F) are generally useful, and, within that range, temperatures between 149° and 199°C (300° to 390°F) are particularly useful for a wide variety of thermosetting mold materials.

In a preferred embodiment, stationary heat plate *31* is provided with a temperature-controlled insert, or sleeve member *35*. Sleeve member *35* is positioned to insulate nozzle member *17* from heat plate *31*. The temperature in sleeve member *35* is controlled by the circulation of a fluid, such as water, at the desired temperature through channels, such as *37*. The temperature in sleeve member *35* is maintained below the temperature at which any substantial curing of the thermosetting molding material will occur and sufficiently high to maintain the thermosetting material in a plasticized condition. Temperatures below the temperature at which any substantial curing takes place are temperatures which are sufficiently low that the fluidity of the plasticized thermosetting feed material is not permanently affected. Generally, temperatures in the range of between 77° and 121°C (170° to 250°F) are useful, and, temperatures from 99° to 116°C (210° to 240°F) are preferably maintained.

The moveable assembly consists of moveable platen, or support plate *39* which has heat plate *41* mounted thereon and moveable therewith. Heat plate *41* has a plurality of mold faces, such as *27*, mounted thereon, positioned to align in register with corresponding mold faces, such as *25*, of the stationary platen assembly. Support blocks, such as *45, 47* and *49*, are suitably utilized between platen *39* and heat plate *41* to insulate platen *39* from heat plate *41*. The moveable assembly is adapted to be moved reciprocally, as a unit, by means not shown, but suitably hydraulically, in and out of aligned contact with the stationary platen assembly.

Moveable heat plate *41* is suitably heated by the circulation of steam or heated oil therethrough, but, more practically, electrically, to maintain a temperature on the mold faces, such as *27*, comparable to that maintained on the corresponding mold faces, such as *25*, that is, a temperature sufficiently high to cure the thermosetting material upon complete closure of the mold faces.

The mold face *25* is provided with runner channels, such as *21*, connecting the mold cavities with feed outlets, such as *19*, of nozzle member *17* when the apparatus components are positioned in the injection stage of the molding cycle as shown in Figure 1.

In a preferred embodiment, moveable heat plate *41* is provided with a temperature-controlled area therein. The temperature-controlled area is positioned to be aligned with, and contiguous to the closed end of nozzle member

*17* when the mold faces are in a fully closed position. The temperature-controlled area is provided by a temperature-controlled plate *51*. Plate *51* has an internal reservoir, suitably comprised of internal connected channels *53*, having an inlet *55* and an outlet *56* to receive and circulate a supply of liquid, e.g., water, at the desired temperature. Plate *51* is preferably separated from direct contact with heat plate *41* along adjacent face thereof by spacers, such as *57*, and is provided with rubber sealing gasket *58*. Temperature-controlled plate *51* is maintained at a temperature lower than that at which any substantial curing of the thermosetting molding material will occur, but sufficiently high that the thermosetting molding material will remain in a plasticized state. Generally, temperatures between 77° and 121°C (170° to 250°F) are utilized, and, within that range, temperatures between 99° and 116°C (210° to 240°F) are aptly suited.

The plasticized molding material fills the mold cavity formed by partially open mold faces *25* and *27*. The distance the mold faces move from a partially open position to a fully closed position generally ranges between 0.06 and 0.50 inches (0.15—1.27 cm) and, more preferably, between 0.10 and 0.2 inches (0.25—0.51 cm). This distance is also the clearance through the runner channels, such as *21*, through which the thermosetting molding material passes from nozzle *17* to the mold cavities. The stationary assembly is provided with runner channels, such as *21*. The moveable assembly is equipped with corresponding runner cutoffs, such as *43*, positioned to fit within and block flow through the runner channels when the molds are in a fully closed position. Openings less than about 0.06 inches (0.15 cm) usually do not allow an easy flow of the molding material through the runner channels, and openings greater than about 0.50 inches (1.27 cm) frequently yield an excess of flash in the area around the mold faces upon closure of the molds.

Figure 2 shows the apparatus of Figure 1 in a closed or compression stage of the molding cycle. Moveable platen assembly has moved toward the stationary platen assembly to close aligned mold faces, such as *25* and *27*, and runner cut-offs, such as *43*, have moved to block runner channels, such as *21*. Thermosetting molding material previously fed into the space between the partially open mold faces is pressed and heated to cure the enclosed material to the internal shape of the mold.

Figure 3 shows the apparatus of Figure 1 in an open position. In this position, the moveable platen assembly has been retracted, moved away from the stationary assembly. The molded articles, for example, *83*, are removed from the molds, suitably by the aid of knock-out pins, not shown, usually positioned in the moveable mold faces. In this position, any flash is removed, the channel and mold face areas are cleaned if necessary, and the components readied for repositioning as shown in Figure 1. At the point shown in Figure 3, the thermosetting molding material in the nozzle and barrel is stored in a plasticized, substantially uncured state in preparation for the next shot or injection of thermosetting material into the mold cavities.

Figure 4 shows the feed nozzle assembly of the present invention in detail. Nozzle member *17* consists of housing *59*, preferably cylindrical in shape, having open end *61* and closed end *63*. The open end is adapted to be connected to the feed barrel of a conventional screw-type molding machine, suitably by thread means *65*. Nozzle member 17 has an internal chamber *67*, formed by closed end *63* and the interior face of housing *59*. Internal chamber *67* has a constricted chamber portion, or zone, *69*, formed by a narrowing of a portion of the internal wall of housing *59* intermediate the open end *61* and closed end *63*. Nozzle *17* is equipped with a temperature-controlled means comprised of a reservoir, comprised of channel or channels *71*, in the thickened wall portion of housing *59*, and preferably encircling constricted zone *69*. Suitably, reservoir *71* has an inlet *73* and an outlet *75* for circulating a liquid, e.g., water of the desired temperature, through reservoir *71*. The temperature of the circulating fluid is adjusted to maintain a temperature in the nozzle member sufficiently high to keep thermosetting molding material within the nozzle in a plasticized state and sufficiently low that no substantial curing or setting up of the material occurs. Usually, temperatures between 77° and 121°C (170° to 250°F) and, within that range, temperatures between 99° and 116°C (210° to 240° F) are useful for a wide variety of thermosetting materials.

Nozzle *17* has a plurality of feed outlets, or orifices, such as *19*, connected to internal chamber *67* and positioned around the periphery thereof contiguous to closed end *63*. Each feed outlet is adapted to be aligned with a runner channel to feed thermosetting molding material from nozzle member *17* into a mold cavity. Nozzle member *17* preferably has a material distribution means comprised of flattened conical member *81* suitably threadably affixed to the internal face of closed end *63* of housing *59*. Thermosetting molding material passes over conical member *81* and is directed axially outward in an even flow through feed outlets, such as *19*, which are preferably positioned around the periphery of flattened conical member *81*.

The apparatus components are preferably fabricated of mold steels selected to withstand the conditions of use.

It will be understood that the present invention provides for the employment of a plurality of mold cavities fed by a single nozzle member. The drawings contemplate, but do not show, additional mold capacity fed by feed orifices, such as *85*, through additional runner channels, such as *87*. Preferably, the molds positioned around the periphery of the feed nozzle are balanced, that is, each of the molds requires equal amounts of plasticized material for filling.

For purposes of simplicity, the present invention has been described in terms of a horizontal clamping arrangement; however, it will be appreciated and understood that the invention is equally adapted to, and useful in, vertical clamping arrangements.

In the above-described drawings the visible edges and exposed surfaces behind the cutting plane have been omitted in the vicinity of the mold cavities to simplify the drawings and facilitate the understanding of the apparatus of the invention.

## Claims

1. An injection-compression molding apparatus comprising first stationary and second moveable platen assemblies each having a platen (29, 39) and a plurality of mold faces (25, 27) mounted on the platen by a heat plate (31, 41) provided with means for heating the heat plate, the mold faces (25) of one of the platens (29) being provided with runner channels (21); means for moving the moveable platen assembly (39, 27, 41) into a position to bring the mold faces (25, 27) into close proximity to form partly open mold cavities (23), into position to close the partly open mold cavities to cure any thermosetting resin enclosed therein and into an open position for removal of a molded article (83) therefrom; and a nozzle (17) fitted to the injection barrel (13) of an injection molding machine for injecting plasticized material into said runner channels (21) and the partly open mold cavities characterized in that said feed nozzle is formed of a housing (59) defining an internal chamber (67) provided with a narrowed restricted zone (69) over an intermediate part of its length and with outlets (19) positioned around the outer periphery of the nozzle for communication with the runner channels, means (71, 73, 75) are provided for controlling the temperature of the housing adjacent said restricted zone, and means (43) are provided on the mold faces (27) of the movable platen (39) for interrupting the feed of thermosetting material from the internal chamber to the runner channels (21) in the mold faces (25) of the stationary platen (29) by blocking said runner channels when the molds are fully closed.

2. The apparatus of claim 1, characterized in that the feed interruption means (43) is operative to block off the outlets (19) when the mold parts are fully closed.

3. The apparatus of claim 1 or 2, characterized in that the means for controlling the temperature within said feed nozzle assembly comprises an internal reservoir (71) within said constrictive zone of said housing adapted (at 73 and 75) to receive a circulating liquid of a desired temperature.

4. The apparatus of claim 1, 2 or 3, characterized in that the stationary heat plate (31) has a temperature-controlled sleeve member (35) therein, positioned to surround the nozzle (17) and separate said heat plate (31) from said nozzle (17).

5. The apparatus of any preceding claim, characterized in that said movable heat plate (39) has a temperature-controlled area comprised of a temperature-controlled plate member (51) aligned with the closed end of said nozzle (17), means being provided for maintaining the plate member (51) at a temperature lower than that at which any substantial curing of the thermosetting molding material will occur but sufficiently high to maintain the molding material in a plasticized condition.

## Revendications

1. Dispositif de moulage par injection-compression, comportant un premier ensemble à plateau fixe et un deuxième ensemble à plateau mobile, chaque ensemble ayant un plateau (29, 39) et une multiplicité d'empreintes de moule (25, 27) montées sur le plateau par une plaque chauffarte (31, 41) équipée de moyens pour chauffer la plaque chauffante, les empreintes de moule (25) de l'un des plateaux (29) comportant des canaux d'injection (21); des moyens pour déplacer l'ensemble à plateau mobile (39, 27, 41) dans une position dans laquelle les empreintes de moule (25, 27) sont très voisines l'une de l'autre pour former des cavités de moule partiellement ouvertes (23), dans une position pour fermer les cavités de moule partiellement ouvertes pour durcir la résine thermodurcissable enfermée à l'intérieur de ces cavités, et dans une position ouverte pour en enlever l'objet moulé (83); et une buse (17) montée sur le cylindre d'injection (13) d'une machine de moulage par injection pour injecter de la matière plastifiée dans les canaux d'injection (21) et dans les cavités de moule partiellement ouvertes, caractérisé en ce que la buse d'alimentation est formée par un carter (59) définissant une chambre intérieure (67), présentant une zone resserrée plus étroite (69) sur une partie intermédiaire de sa longueur et des orifices de sortie (19) disposés autour de la périphérie extérieure de la buse pour communiquer avec les canaux d'injection, en ce que des moyens (71, 73, 75) sont prévus pour régler la température du carter au voisinage de cette zone resserrée, et en ce que des moyens (43) sont prévus sur les empreintes de moule (27) du plateau mobile (39) pour interrompre l'arrivée de la matière thermodurcissable de la chambre interne aux canaux d'injection (21) dans les empreintes de moule (25) du plateau fixe (29) en bloquant ces canaux d'injection lorsque les moules sont complètement fermés.

2. Dispositif selon la revendication 1, caractérisé en ce que les moyens interrompant l'arrivée de la matière thermodurcissable (43) agissent pour bloquer les sorties (19) lorsque les parties de moule sont complètement fermées.

3. Dispositif selon la revendication 1 ou la revendication 2, caractérisé en ce que les moyens pour régler la température à l'intérieur de l'ensemble de buse d'alimentation comportent un réservoir intérieur (71) à l'intérieur de la zone resserrée du carter, adapté (en 73 et 75) pour recevoir un liquide de circulation à la température désirée.

4. Dispositif selon la revendication 1, la revendication 2 ou la revendication 3, caractérisé en ce que la plaque chauffante fixe (31) a un manchon à température contrôlée (35) disposé pour entourer la buse (17) et pour séparer la plaque chauffante (31) de la buse (17).

5. Dispositif selon l'une quelconque des revendications précédentes, caractérisé en ce que la plaque chauffante mobile (39) a une zone à température contrôlée constituée par une plaque à température contrôlée (51) alignée avec l'extrémité fermée de la buse (17), des moyens étant prévus pour maintenir la plaque (51) à une température inférieure à celle pour laquelle un durcissement substantiel de la matière de moulage thermodurcissable a lieu, mais suffisamment élevée pour maintenir la matière de moulage à l'état plastifié.

**Patentansprüche**

1. Formmaschine zum Spritz-Formpressen mit einer ersten ortsfesten sowie einer zweiten beweglichen Plattengruppe, von denen jede eine Platte (29, 39) sowie eine Mehrzahl von Formflächen (25, 27), die an der Platte durch eine mit Einrichtungen zu ihrer Beheizung versehene Heizplatte (31, 41) befestigt sind, aufweist, wobei die Formflächen (25) von einer der Platten (29) mit Eingießkanälen (21) versehen sind, mit einer die bewegliche Plattengruppe (39, 27, 41) in eine Stellung, in der die Formflächen (25, 27) nahe beieinander sind und teilweise offene Formhohlräume (23) bilden, in eine Stellung, in der die teilweise offenen Formhohlräume geschlossen sind, um in diesen eingeschlossenes wärmehärtbares Harz zu härten, sowie in eine offene Stellung zur Entnahme eines geformten Gegenstands (83) aus den Formhohlräumen bewegenden Einrichtung und mit einer am Spritzzylinder (13) einer Spritzgießmaschine befestigten, plastifiziertes Material in die Eingießkanäle (21) und die teilweise offenen Formhohlräume einspritzenden Düse (17), dadurch gekennzeichnet, daß die Einspritzdüse aus einem eine innere Kammer (67), die über einem mittleren Teil ihrer Länge mit einer verengten, eingeschnürten Zone (69) und mit rund um den Außenumfang der Düse angeordneten, mit den Eingießkanälen in Verbindung stehenden Auslässen (19) versehen ist, begrenzenden Gehäuse (59) besteht, daß eine die Temperatur des Gehäuses im der eingeschnürten Zone benachbarten Bereich steuernde Einrichtung (71, 73, 75) vorgesehen ist und daß an den Formflächen (27) der beweglichen Platte (39) eine den Zufluß von wärmehärtbarem Material von der inneren Kammer zu den Eingießkanälen (21) in den Formflächen (25) der ortsfesten Platte (29) durch Blockieren der Eingießkanäle im völlig geschlossenen Zustand der Formen unterbrechende Einrichtung (43) ausgebildet ist.

2. Maschine nach Anspruch 1, dadruch gekennzeichnet, daß die den Zufluß unterbrechende Einrichtung (43) im völlig geschlossenen Zustand der Formteile zur Blockierung der Auslässe (19) wirksam ist.

3. Maschine nach Anspruch 1 oder 2, dadurch gekennzeichnet, daß die die Temperatur innerhalb der Zufuhrdüsenanordnung steuernde Einrichtung innerhalb des eingeschnürten Bereichs des Gehäuses einen inneren Sammelraum (71) umfaßt, der (bei 73 und 75) eine umlaufende Flüssigkeit mit einer gewünschten Temperatur empfangen kann.

4. Maschine nach Anspruch 1, 2 oder 3, dadurch gekennzeichnet, daß die ortsfeste Heizplatte (31) mit einem innenliegenden, temperaturgesteuerten Hülsenteil (35) versehen ist, das die Düse (17) umschließt und die Heizplatte (31) von der Düse (17) trennt.

5. Maschine nach einem der vorhergehenden Ansprüche, dadurch gekennzeichnet, daß die bewegliche Heizplatte (39) einen temperaturgesteuerten, aus einem Plattenteil (51), das mit dem geschlossenen Ende der Düse in Flucht ist, gebildeten Flächenbereich hat und daß eine Einrichtung vorgesehen ist, die das Plattenteil (51) auf einer Temperatur hält, die niedriger als diejenige ist, bei der einer wesentliche Härtung des wärmehärtbaren Materials eintritt, die jedoch ausreichend hoch ist, um die Formmasse in einem plastifizierten Zustand zu halten.

FIG. 1

0 013 119

FIG. 2

0 013 119

FIG. 4

4